# EUROPEAN PATENT APPLICATION

(11) **EP 1 522 741 A2**
(43) Date of publication of application: **13.04.2005**
(21) Application number: 04023655.6
(22) Date of filing: 05.10.2004
(51) Int. Cl.: F16B 5/06

(54) **Arcuate-hinge fastener**

(30) Priority: 09.10.2003 US 682446
(71) Applicant: Newfrey LLC, Newark, Delaware 19711 (US)
(72) Inventor: Benedetti, Steven Michael, Sterling Heights Michigan 48313-3614 (US); Higgins, Lawrence John, Sterling Heights Michigan 48313 (US)
(74) Representative: Haar, Lucas Heinz Jörn

(57) **Abstract**

A fastener (400) can be of the general type inserted into a hole in a panel. Such a fastener may include at least two arcuate hinge segments (412) and a corresponding number of wings (410) extending divergently away from the hinge segments, each hinge segment having two arcuate surfaces (460, 462) spaced apart from the center post. Such a fastener may also include wing-arms (424A, 424B) that extend convergently towards a region (470) beyond the distal end of the center post and that collectively take on a beak configuration, e.g., ends of the wing-arms taking on a ball-and-socket conformation (464A, 464B).

## Description

### BACKGROUND OF THE PRESENT INVENTION

In general, winged fasteners are known. A typical winged fastener has a silhouette that generally resembles an arrow (↓). The wings have an outside edge that bears against an edge of a hole in a panel (e.g., as can be found in an automobile) into which the fastener has been inserted. Two variations of a winged fastener are depicted in Background Art Figs. 1-2, which correspond to two figures shown in U.S. Patent No. 5,851,097 to Shereyk et al.

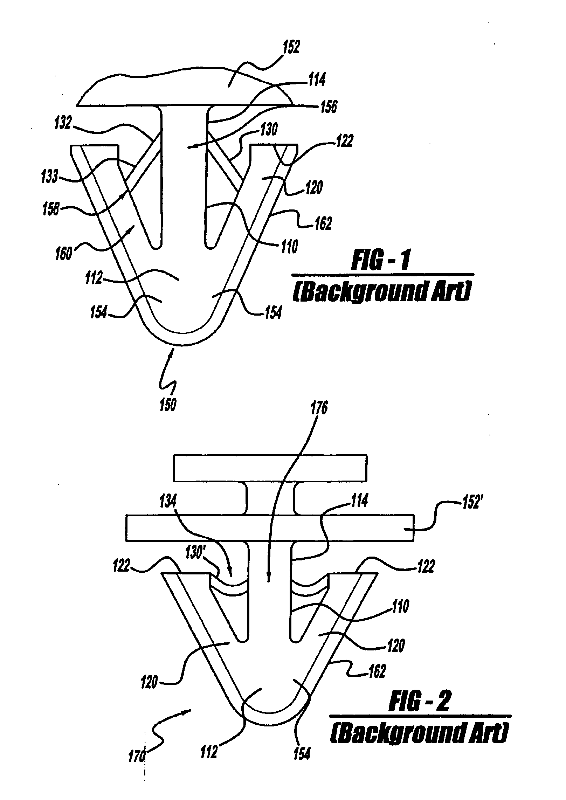

Background Art Fig. 1 is a fragmentary, side elevational view depicting a first variation 150 of a winged fastener that includes a stem 110 connected to a base 152. Proximal ends 154 of resilient arms/wings 120 are directly connected to a distal (relative to the base 152) end 112 of stem 110. The side 162 of each wing 120 is straight. A thin, flexible web (tether) 130 tethers a corresponding arm 120 to stem 110. Each flexible tether 130 slopes divergently away from both base 152 and stem 110. Each flexible tether 130 connects between: a point 156 along stem 110 near proximal end 114 thereof; and a point 158 on respective wing 120 between an approximate midpoint 160 and distal end 122.

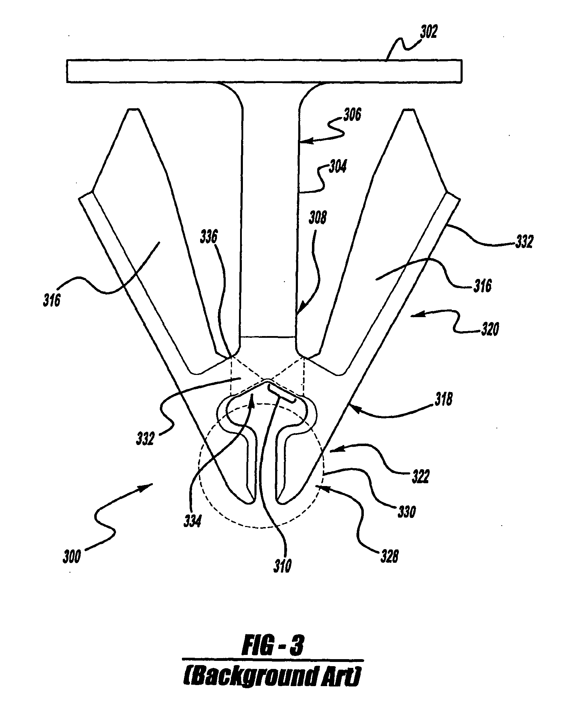

Background Art Fig. 2 is a fragmentary, side elevational view depicting a second variation 170 of a winged fastener that is similar to fastener 150; hence, several reference numbers have been reused and a general discussion thereof is omitted for brevity. Tethers 130' of fastener 170 connect between a point 176 along stem 110; and distal end 122 of corresponding wing 120. Point 176 and distal ends 122 are located approximately the same perpendicular distance from base 152'. In the nominal position of wings 120, tethers 130' have a curved shape referred to as a pre-flex radius 134.

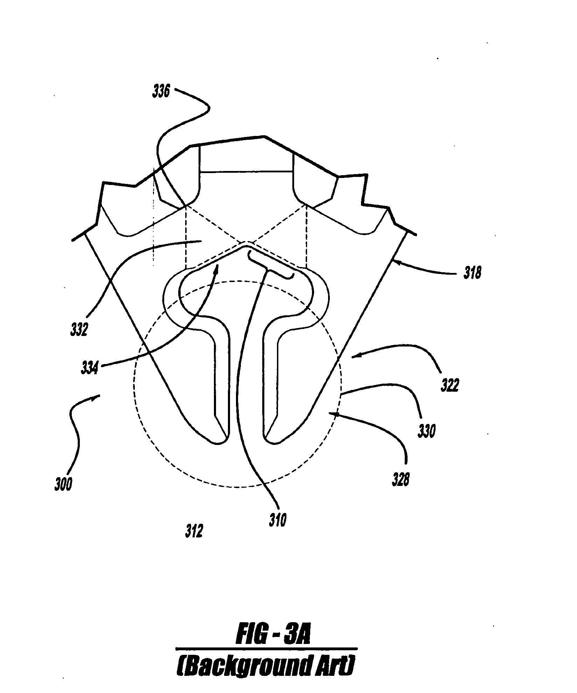

A third variation 300 of a winged fastener according to the Background Art is depicted in Fig. 3 (a fragmentary, side elevational view) and the corresponding enlarged partial view of Fig. 3A. Fastener 300 includes a stem 304 connected to a base 302. The distal (relative to base 302) end 308 of stem 304 is connected to at least two wings 316 via corresponding planar hinges 310. Each wing 316 has: a straight side 332; and an upper portion 320 and a lower portion 322. Each planar hinge 310 connects between: distal end 308 of stem 304; and a location 318 on corresponding wing 316. There is no second connection between wings 316 and stem 304, such as is formed by tethers 130, 130' of Figs. 1-2. Lower portions 322 extend convergently toward a region 330 lying below distal end 308 of stem 304. Distal ends 328 of lower portions 322 are arranged adjacent each other in region 330, which resembles a beak.

### SUMMARY OF THE PRESENT INVENTION

In accordance with the present invention, an aspect is directed to a fastener of the general type inserted into a hole in a panel. According to another aspect of the present invention, such a fastener may include: at least two arcuate hinge segments, joining a distal end of a center post and a corresponding number of wings extending divergently away from the hinge segments. According to another aspect of the present invention, wing-arms extend convergently towards a region beyond the distal end of the center post to collectively take on a beak configuration, e.g., ends of the wing-arms taking on a ball-and-socket conformation.

According to yet another aspect of the present invention, there is provided a fastener (400). Such a fastener may include: a base (406); a center post (402) extending from the base; at least two arcuate hinge segments (412) extending divergently from a distal end (406) of the center post and away from the base, each hinge segment having two arcuate surfaces (460, 462) both of which are spaced apart from the distal end of the center post; and at least two wings (410) extending divergently away from a region near the distal end of the center post and towards the base, distal ends (418) of the arcuate hinge segments joining the wings, respectively.

According to yet another aspect of the present invention, there is provided a polymeric fastener (400). Such a fastener may include: an elongated first member (402); a deflectable second member (412) coupled to and diagonally extending from the first member; at least a deflectable third member (410) coupled to and diagonally extending from the first member, the second and third members being spaced from each other; a tip area (466) including a rounded section (464A) and an concave section (464B), the rounded section and the concave section being spaced from each other if the fastener is in an unfastened state, the rounded section contacting against the concave section if the fastener is in a state wherein fastener retraction force is greater than fastener insertion force.

According to yet another aspect of the present invention, there is provided a method of using a fastener (400) having wings (410) coupled at respective middle portions (420) thereof via first-type connections (412) to and deflectable about a bifurcated end (406) of a shaft (402), there being corresponding portions (424A, 424B) of the wings resembling pincers, there also being diagonal members (414) representing second-type connections between the shaft and the wings, respectively. Such a method may include: the fastener exhibiting a threshold first amount of force necessary to fully insert the fastener into a hole (602) in a panel (604); and the fastener exhibiting a threshold second amount of force greater than the first amount necessary to withdraw the fully-inserted fastener from the hole.

Aspects of the present invention that are advantageous over conventional constructions include: exhibiting a relatively large withdrawal force threshold and a relatively small insertion force threshold; and not suffering, despite being of relatively small size, the tendency of smaller fasteners to have an elevated insertion force threshold relative to larger fasteners.

Further areas of applicability of the present invention will become apparent from the detailed description provided hereinafter. It should be understood that the detailed description and specific examples, while indicating example embodiments of the present invention, are intended for purposes of illustration only and are not intended to limit the scope of the present invention.

### BRIEF DESCRIPTION OF THE DRAWINGS

The present invention will become more fully understood from the detailed description and the accompanying drawings, wherein:
Fig. 1 is a fragmentary, side elevation view depicting a winged fastener according to the Background Art.
Fig. 2 is a fragmentary, side elevation view depicting another winged fastener according to the Background Art.
Fig. 3 is a fragmentary, side elevation view depicting yet another winged fastener according to the Background Art.
Fig. 3A is an enlarged partial view of Fig. 3.
Fig. 4 depicts a side elevational view of an arcuate-hinge winged fastener according to an aspect of the present invention.
Fig. 4A is an enlarged partial view of Fig. 4.
Fig. 5 depicts a three-quarter perspective of the arcuate-hinge fastener of Fig. 4.
Figs. 6A-6C are side elevational views, partially in cross-section, depicting various stages the arcuate-hinge fastener of Fig. 4 being inserted into a hole in a panel.

While Figs. 1-6C generally depict relative proportion, they are not to be interpreted as drawn to scale.

### DETAILED DESCRIPTION OF EXAMPLE EMBODIMENTS

The following description of example embodiments is not intended to limit the present invention, its application, or uses.

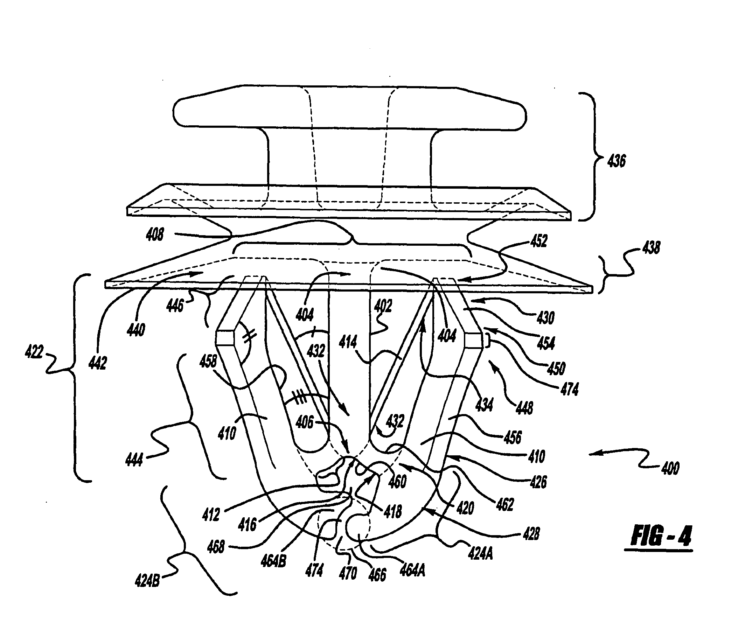

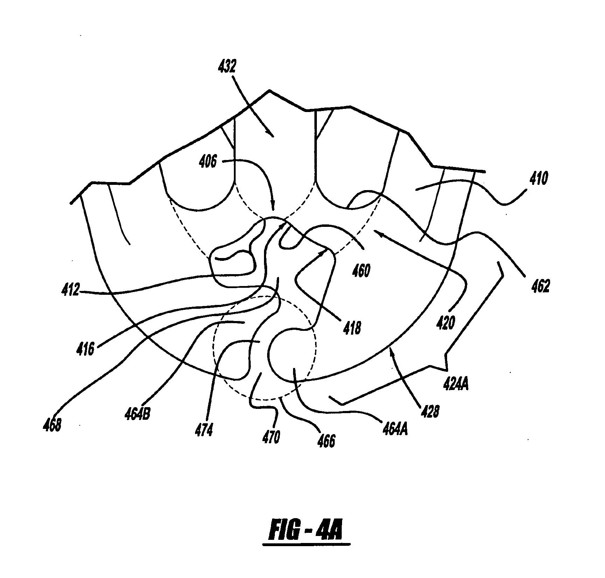

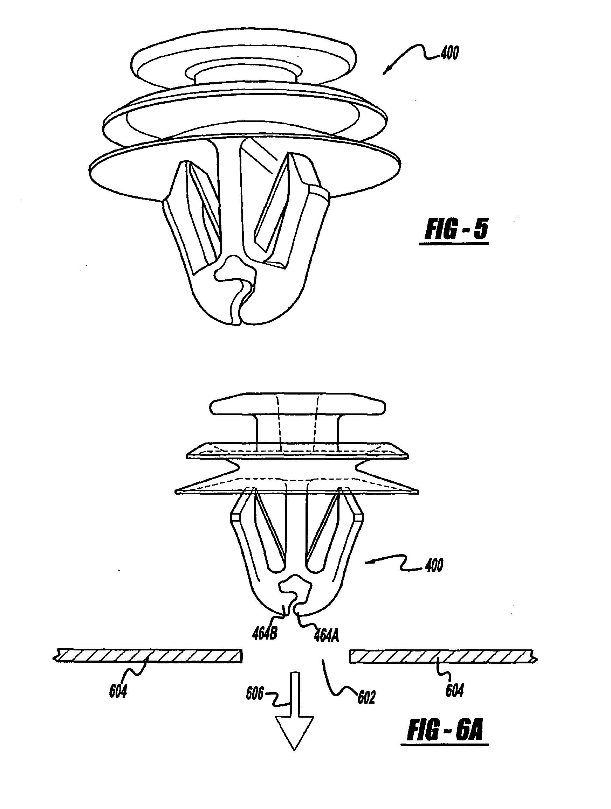

Fig. 4, 4A and 5 depict a side elevational view of an arcuate-hinge winged fastener 400 according to an aspect of the present invention. Most of the reference numbers in Fig. 4 have not been repeated in Fig. 5, for clarity of the perspective view. Such a fastener 400 can be inserted into a hole, e.g., in a panel of an automobile (see Figs. 6A-6C, below), and can be used to attach, a trim panel, insulation, carpet, a wiring assembly, etc.

Fastener 400 includes: a center post (or shaft, stalk or pillar) 402, a base (or head) 408, wings 410, arcuate hinges 412, and bridges (or suspension links) 414. A proximal end 404 of center post 402 joins base 408. At least two wings 410 are coupled to center post 402 via a corresponding number of arcuate hinges 412. Together, center post 402 and arcuate hinges 412 exhibit a silhouette than can be described as an inverted Y-shape.

A proximal end 416 of each arcuate hinge 412 joins a distal end (or tip) 406 of center post 402. Alternatively, if distal end 406 of center post 402 were considered to include arcuate hinges 412, then center post 402 could be described as bifurcating at distal end 406.

A distal end 418 of each arcuate hinge 412 joins an interior location 420 on corresponding wing 410. Each wing 410 includes an upper portion 422 and a lower portion 424, relative to a location 420. Proximal ends 426 and 428 of upper and lower portions 422 and 424, respectively, of each wing 410 join distal end 418 of corresponding arcuate hinge 412. Upper portions 422 overall extend divergently away from center post 402 and toward an imaginary plane generally coplanar with base 408.

Together, upper 422 and lower 424 portions of a wing 410 and a corresponding arcuate bridge 412 exhibits a silhouette than can be described as analogous to the head of a claw hammer, in which the neck of the hammer analogizes to arcuate hinge 412, upper portion 422 analogizes to an elongated striking-face region of the hammer head, and lower portion 424 analogizes to the claw of the hammer head. Alternatively, together, upper 422 and lower 424 portions of a wing 410 and a corresponding arcuate bridge 412 exhibits a silhouette than can be described as a T-shaped configuration, in which arcuate bridge 412 analogizes to the trunk of the T-shape, and upper 422 and lower 424 portions analogize to the arms of the T-shape.

Each bridge 414 is a straight member and, typically, can be relatively thinner than corresponding upper portion 422. Distal end 434 of each bridge 414 joins distal end 430 of upper portion 422 of corresponding wing 410. Proximal end 432 of each bridge 414 joins center post 402 at a location 432 substantially adjacent distal end 406. Each bridge 414 represents a second connection between corresponding wing 410 and center post 402 (the first connection being via corresponding arcuate hinge 412).

Base 408 can be formed to include a head arrangement 436 of various configurations depending upon the circumstances of the use to which fastener 400 is put. In addition, base 408 can be formed to include an umbrella surface 438 that defines a void or concavity 440. An edge 442 of umbrella surface 438 bears against a panel (see Fig. 6C, discussed below) when fastener 400 is inserted into a hole in the panel.

Upper portion 422 of each wing 410 can itself be described as having two parts, namely a lower part 444 and an upper part 446. Distal end 448 of lower part 444 joins proximal end 450 of upper part 446. There can be a flat surface 474 where distal end 448 joins proximal end 450. Lower parts 444 extend divergently away from center post 402 and toward the imaginary plane generally coplanar with base 408. Upper parts 446 extend convergently toward an imaginary line generally collinear with the long axis of center post 402 and towards base 408.

As noted, each bridge 414 joins corresponding wing 410 at distal end 430. More particularly, each bridge 414 joins corresponding wing 410 at distal end 452 of upper part 446. Lower portions 424 of wings 410 can be arranged to have distal ends 464A and 464B that take on a ball-and-socket configuration 466, in which distal 464A represents the ball and distal end 464B represents the socket. Hence, the lower portions are given the reference numbers 424A and 424B, respectively. Lower portions 424A and 424B, as well as hinge portions 412, define a region 468 having a mouth 470. Together lower portions 424A and 424B of two wings 410 have a silhouette that resembles a beak (or pincers).

In developing the present invention, the following problem with the prior art was recognized, the physics thereof was determined, and the problem overcome. Fastener 300 according to the Background Art exhibits an insertion force that is much higher than is desirable. Planar hinge 310 has a planar surface 334 that, relative to an opposing curved surface 336, creates a flexing region 332 having a triangular cross section. In response to a force applied to withdraw fastener 300, such a triangular flexing region 332 creates opposing and substantially unbalanced tension and compression forces that desirably increase the force-threshold necessary to remove fastener 300 after it has been inserted into the hole in the panel. But in response to a force applied to insert fastener 300, corresponding opposing and substantially unbalanced tension and compression forces also arise when wings 316 flex inwardly, making the insertion force significantly greater than is desirable. It is more desirable for a fastener to exhibit significantly lower insertion force relative to (significantly higher) withdrawal/extraction force, as is accomplished by the present invention.

As contrasted with the Background Art planar hinges 310, each arcuate hinge 412 according to an aspect of the present invention can be arcuate in the sense that each of upper surface 462 and lower surface 460 is a substantially curved planar surface. Additionally, surfaces 462 and 460 can be concentric. Each pair of surfaces 462 and 460 creates opposing and substantially more balanced tension and compression forces in response to wings 410 flexing inward or outward, which results in relatively more balanced forces that oppose withdrawal or insertion. In contrast to such balance, bridges 414 produce significantly higher forces opposing a withdrawal force than an insertion force.

Via the combination of arcuate hinges 412 and bridges 414, fastener 400 exhibits a significantly lower insertion force than extraction force (again, as contrasted to the Background Art planar hinges 310). Bridges 414 contribute to a relatively larger extraction force threshold by more strongly restraining deflection (of upper parts 446 of upper portions 422 of wings 410) away from center post 402 than deflection towards center post 402.

The extraction force threshold of fastener 400 is increased further by including the beak configuration of lower portions 424A and 424B. Under an extracting force, wings 410 deflect outward, causing distal ends 464A and 464B of lower portions 424A and 424B, respectively, to pinch together or collide (also described as convergent deflection), at which point the force restraining such deflection becomes greater, which results in the extraction force becoming correspondingly greater.

A surface 454 that generally faces toward void 440 (and that is generally opposite a side facing center post 402) of upper part 446 (of upper portion 422 of each wing 410) can be straight between locations 405 and 452. Distal end 452 of each upper part 446 extends into void 440 defined by umbrella surface 438. Each surface 454 bears against an edge of the hole in the panel into which fastener 400 has been fully inserted; hence, each surface 454 can be described as a holding surface. From a perspective generally transverse to the long axis of upper part 446, surface 454 can be planar or curved depending upon how much surface area contact against the edge of the hole (in the panel) is desired. The arrangement of wings 410 relative to umbrella surface 438 can be dimensioned to keep umbrella surface 438 in compression when fastener 400 is inserted into the hole.

A surface 456 (that is generally opposite a surface 458 facing center post 402) of lower part 444 (of upper portion 422 of each wing 410) can be curved or (less preferably) straight between locations 448 and 426. If curved, lower part 444 can be convex such that ends 426 and 448 are farther from center post 402 than a middle portion. Each surface 458 (that is generally opposite surface 456) can be concentric with or parallel to corresponding surface 456, respectively. From a perspective generally transverse to the long axis of lower part 444, surface 456 can be planar or curved depending (again) upon how much surface area contact against the edge of the hole (in the panel) is desired.

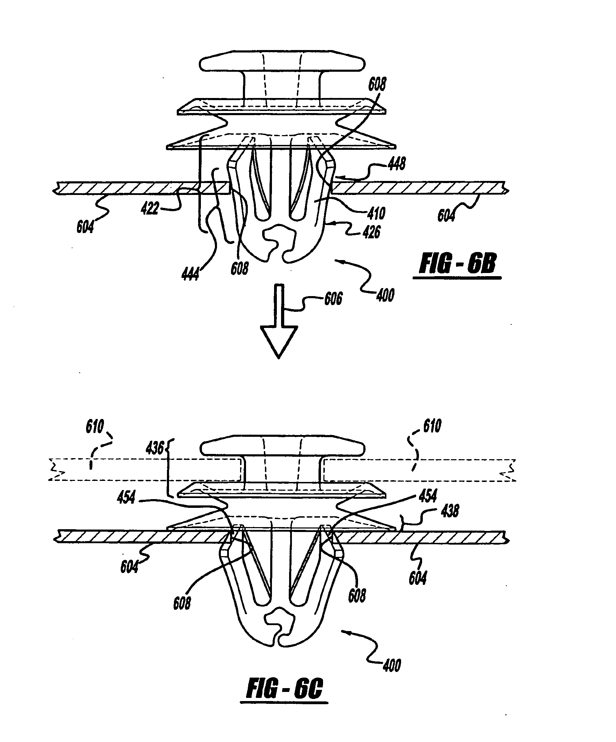

Each surface 456 bears temporarily against an edge of the hole in the panel into which fastener 400 is partially inserted, causing wings 410 to temporarily deflect towards center post 402 (see Fig. 6B, discussed below). The divergent arrangement of wings 410 helps guide fastener 400 into the hole, hence each surface 456 can be described as a guide surface.

Some specific example values for fastener 400 are provided as follows. An angle (I) swept out between each bridge 414 and center post 402 can be about 13.5°. An angle (II) swept out between lower part 444 and upper part 446 of each wing 410 can be about 134°. An angle (III) swept out between lower part 444 and center post 402 can be about 20°. A distance from distal end 452 (of upper part 446 of upper portion 422) to distal ends 464A/464B (of lower portion 424) of each wing 410 can be about 9.6 cm. A distance from distal end 406 of center post 402 to distal ends 464A/464B of lower portions 424 of each wing 410 can be about 3 cm. A gap between distal ends 464A and 464B in mouth 470 can be about 0.35mm. A radius of curvature between locations 448 and 426 for surface 456 can be about 28 mm. Radii of curvature for arcuate hinges 412 can be about 0.65 mm for upper surface 462 and about 1.4 mm for lower surface 460. An insertion force F_{I} can be F_{I} < ( ≈ 5 lbs). A withdrawal force F_{w} can be in the range (≈ 30 lbs) < F_{w} < (≈ 50 lbs). It bears repeating that these are merely example values of dimensions and force; variations are contemplated.

Figs. 6A-6C are cross-sections depicting various stages the arcuate-hinge fastener 400 of Fig. 4 being inserted into a hole 602 in a panel 604. Fig. 6A shows fastener 400 as it is moving in an insertion direction 606 toward hole 602, but before distal ends 464A/464B have entered hole 602.

Fig. 6B shows fastener 400 partially inserted into hole 602 to a point where panel 604 is adjacent approximately the midpoint of lower part 444 of upper portion 422 of wings 410. It is to be noted that diameter of hole 602 is smaller than a nominal spread of wings 410 at their widest point such that wings 410 are shown in Fig. 6B as inwardly deflected by edges 608 of hole 402 in panel 604.

It is also noted that the diameter of hole 602 should be sufficient so that, during insertion, edges 608 of hole 602 initially contact surface 456 a minimum distance above the flexing location within arcuate hinges 412 in order to achieve the lowered threshold amount of insertion force. Relative to the flexing location, the minimum distance is measured in a direction generally opposite insertion direction 606. In the context of the example dimensions and forces provided above, the corresponding example of minimum distance would be about 1.0 mm.

Fig. 6C shows fastener 400 fully inserted into hole 602. Holding surfaces 454 bear against edges 608 of hole 602. Edge 442 of umbrella surface 438 bears against panel 602, putting umbrella surface 438 into compression to provide an impediment (at the least) to a water-seepage, if not a barrier.

As an example. Fig. 6C has been couched in the circumstance that panel 604 is a panel in an automobile. Extending the example, a trim panel (or carpet) 610 (shown in phantom lines) is shown engaging head arrangement 436. Alternatively, structure 610 can be a support for a wiring harness, sound deadening material, a floor mate, etc.

Fastener 402 is a single, unitary part made by injection molding from a suitable engineering grade polymer, e.g., polyoxymethylene ("POM"), also known as polyacetal resin. While other materials may of course be employed for manufacturing fastener 400, some of the advantages of the present invention may not be realized when such other materials are used. Further, while fastener 400 can be manufactured using a suitable plastic injection molding process it should be realized that other manufacturing techniques may be employed, although, again, some of the advantages may not be realized when such manufacturing techniques are used.

It is alternatively envisioned that the fastener of the present invention may be employed in non-automotive uses. Furthermore, the fastener can be inserted into multiple panels of various hole shapes and material. Additionally, alternate head shapes can be used although some of the present advantages may not be achieved.

The described embodiments are examples of the present invention and, thus, variations that do not depart from the gist of the present invention are intended to be within the scope of the present invention. Such variations are not to be regarded as a departure from the spirit and scope of the present invention.

## Claims

1. A fastener (400) comprising:
a base (406);
a center post (402) extending from the base;
at least two arcuate hinge segments (412) extending divergently from a distal end (406) of the center post and away from the base, each hinge segment having two arcuate surfaces (460, 462) both of which are spaced apart from the distal end of the center post; and
at least two wings (410) extending divergently away from a region near the distal end of the center post and towards the base, distal ends (418) of the arcuate hinge segments joining the wings, respectively.

2. The fastener as in claim 1, wherein the fastener is polymeric and at least one of the arcuate hinge segments and the wings is resilient.

3. The fastener as in any one of the preceding claims, wherein the two arcuate surfaces of each arcuate hinge segment are opposing surfaces that are concentric.

4. The fastener as in any one of the preceding claims, wherein the divergent arrangement of the two arcuate hinge segments with respect to the center post has an inverted Y-shaped conformation.

5. The fastener as in any one of the preceding claims, further comprising:
two bridges (414) joining the center post near the distal end thereof and extending from wing-ends (452) distal relative to where the arcuate hinge segments join the wings, respectively.

6. The fastener as in claim 5, wherein each bridge segment represents a substantially straight member.

7. The fastener as in any one of the preceding claims, wherein:
each of the at-least-two wings includes a first portion (422) and a second portion (424);
a proximal end (428) of each second portion joining the distal end of the respective arcuate hinge segment;
each first portion sloping away from the center post;
the proximal ends of the second portions joining proximal ends (426) of the first portions, respectively; and
each of the second portions extending toward the base and sloping toward an imaginary line substantially collinear with a long axis of the center post.

8. The fastener as in claim 7, wherein each first part is a curved member (444 and 446).

9. The fastener as in claim 8, wherein:
an outside surface (454, 474) of the first part bears against an edge (608) defining a hole (602) in a panel (604) when the fastener is partially inserted into the hole; and
an outside surface (456) of the second part bears against the edge defining a hole in a panel when the fastener is fully inserted into the hole.

10. The fastener as in any one of the preceding claims, wherein:
the base is part of a head (436);
the head is arranged to have a concave umbrella surface (438); and
the umbrella surface is disposed such that the wings partially extend into a void (440) defined by the umbrella surface.

11. A polymeric fastener (400) comprising:
an elongated first member (402);
a deflectable second member (412) coupled to and diagonally extending from the first member;
at least a deflectable third member (410) coupled to and diagonally extending from the first member, the second and third members being spaced from each other;
a tip area (466) including a rounded section (464A) and an concave section (464B), the rounded section and the concave section being spaced from each other if the fastener is in an unfastened state, the rounded section contacting against the concave section if the fastener is in a state wherein fastener retraction force is greater than fastener insertion force.

12. The polymeric fastener as in claim 11, wherein:
the couplings of the second and third members to the first member represent first-type connections therebetween, respectively; and
the polymeric fastener further comprises
first and second suspension links (414) operable to restrain deflection of the second and third members via the making of second-type connections between the first member and the second and third members, respectively.

13. A method of using a fastener (400) having wings (410) coupled at respective middle portions (420) thereof via first-type connections (412) to and deflectable about a bifurcated end (406) of a shaft (402), there being corresponding portions (424A, 424B) of the wings resembling pincers, there also being diagonal members (414) representing second-type connections between the shaft and the wings, respectively,
the method comprising:
the fastener exhibiting a threshold first amount of force necessary to fully insert the fastener into a hole (602) in a panel (604); and
the fastener exhibiting a threshold second amount of force greater than the first amount necessary to withdraw the fully-inserted fastener from the hole.

14. The method as in claim 13, further comprising:
the fastener exhibiting a threshold third amount of force necessary for a an attempt at withdrawing the fastener to begin deflection of the wings from a position thereof taken while the fastener is fully inserted in the hole,
the third amount being greater than the first amount but less than the second amount; and
the fastener exhibiting, upon deflection of the wings sufficient that the pincers collide, the second force.
